# EUROPÄISCHE PATENTSCHRIFT

(11) **EP 3 218 993 B1**
(45) Veröffentlichungstag und Bekanntmachung des Hinweises auf die Patenterteilung: **29.04.2020**
(21) Anmeldenummer: 15760473.7
(22) Anmeldetag: 10.09.2015
(51) Int. Cl.: H02K 3/14, H02K 3/28

(54) **STATOR EINER ELEKTRISCHEN MASCHINE**
STATOR FOR ELECTRIC MACHINE
STATOR D'UNE MACHINE ÉLECTRIQUE

(30) Priorität: 11.11.2014 DE 102014222942
(43) Veröffentlichungstag der Anmeldung: 20.09.2017
(73) Patentinhaber: Robert Bosch GmbH, 70442 Stuttgart (DE)
(72) Erfinder: BAUER, David, 71679 Asperg (DE); HEUSER, Patrick, 70372 Stuttgart (DE)
(86) Internationale Anmeldenummer: PCT/EP2015/070753
(87) Internationale Veröffentlichungsnummer: WO 2016/074825

(56) Entgegenhaltungen:
- WO-A2-2014/060807
- US-A1- 2008 315 707
- US-A1- 2012 228 981
- US-A1- 2013 127 289
- US-A1- 2014 042 862

## Beschreibung

### Stand der Technik

Die Erfindung geht aus von einem Stator einer elektrischen Maschine nach der Gattung des Hauptanspruchs.

Es sind schon Statoren von elektrischen Maschinen mit jeweils einem ringförmigen Statorpaket bekannt, das zu einer Achse des Stators hin offene Nuten aufweist, in denen eine elektrische Wicklung vorgesehen ist, die mehrere Wicklungszweige umfasst. Die mehreren Wicklungszweige weisen jeweils mehrere parallele Drähte zur Reduzierung des sogenannten Skin-Effektes auf. Die parallelen Drähte sind in den Nuten angeordnet, wobei die Wicklungszweige in ihrem Verlauf jeweils mehrere Spulenwindungen bilden, die jeweils Teil einer elektrischen Spule sind, wobei eine Spulenwindung jeweils gebildet ist durch zwei in unterschiedlichen Nuten liegende Windungsseiten eines der Wicklungszweige und durch einen die beiden Windungsseiten miteinander verbindenden Windungsseitenverbinder. Bei elektrischen Wicklungen mit parallel Drähten kann es aufgrund ungünstiger Drahtlage und einer daraus resultierenden Verkettung unterschiedlicher magnetischer Flüsse zu nachteiligen Ausgleichs- bzw. Kreisströmen kommen, die zusätzliche Kupferverluste in der elektrischen Maschine erzeugen.

Die US 2008/315707 A1 offenbart einen Stator einer elektrischen Maschine mit den Merkmalen des Oberbegriffs des Anspruchs 1.

### Vorteile der Erfindung

Der erfindungsgemäße Stator der elektrischen Maschine mit den kennzeichnenden Merkmalen des Hauptanspruchs hat demgegenüber den Vorteil, dass die Ausgleichs- bzw. Kreisströme in den parallelen Drähten vermieden oder zumindest verringert werden, indem jeweils die parallelen Drähte, die in derselben Nut angeordnet sind, in einem gemeinsamen Nutabschnitt der jeweiligen Nut mit einer Nutabschnittshöhe vorgesehen sind, wobei der Nutabschnitt jeweils in radialer Richtung übereinander angeordnete schichtförmige Bereiche umfasst, wobei jeweils die parallelen Drähte, die derselben Windungsseite angehören, in demselben schichtförmigen Bereich des Nutabschnitts angeordnet sind.

Durch die in den Unteransprüchen aufgeführten Maßnahmen sind vorteilhafte Weiterbildungen und Verbesserungen des im Hauptanspruch angegebenen Stators einer elektrischen Maschine möglich.

Gemäß einer vorteilhaften Ausführung hat der schichtförmige Bereich eine radiale Höhe, die kleiner ist als ein Wert, der sich aus einem Faktor multipliziert mit dem Verhältnis der Nutabschnittshöhe zur Anzahl der schichtförmigen Bereiche pro Nutabschnitt berechnet, wobei der Faktor im Bereich zwischen 1,1 und 2 liegt und die Anzahl der schichtförmigen Bereiche des jeweiligen Nutabschnitts der Anzahl der in derselben Nut angeordneten Windungsseiten entspricht. Der schichtförmige Bereich weist vorteilhafterweise jeweils eine Breite auf, die der Breite der Nuten entspricht, ggf. abzüglich der Dicke einer Nutisolation und/oder abzüglich vorhandener Luftspalte zwischen der Nut und der Nutisolation.

Besonders vorteilhaft ist, wenn benachbarte radiale Bereiche sich maximal mit einem vorbestimmten Prozentsatz ihrer radialen Höhe überschneiden. Je kleiner der Prozentsatz der Überschneidung ist, desto weniger Ausgleichsströme und desto weniger Kupferverluste treten auf.

Desweiteren vorteilhaft ist, wenn mehrere parallele Wicklungszweige derselben Phase vorgesehen sind, deren Windungsseiten in den Nuten jeweils in verschiedenen radialen Lagen angeordnet sind, wobei die verschiedenen radialen Lagen in jedem parallelen Wicklungszweig gleich häufig vorkommen. Durch die Gleichverteilung der Windungsseiten in den Wicklungszweigen werden die Ausgleichs-bzw. Kreisströme in den parallelen Wicklungszweigen und damit die zusätzlichen Kupferverluste weiter verringert.

### Zeichnung

Zwei Ausführungsbeispiele der Erfindung sind in der Zeichnung vereinfacht dargestellt und in der nachfolgenden Beschreibung näher erläutert.
- Fig.1: zeigt einen Stator einer elektrischen Maschine mit Nuten, in denen Wicklungszweige einer einzigen elektrischen Phase der elektrischen Wicklung gemäß einem ersten Ausführungsbeispiel angeordnet sind,
- Fig.2: drei parallele Wicklungszweige der elektrischen Wicklung gemäß einem ersten Ausführungsbeispiel nach Fig.1,
- Fig.3: einen Wicklungszweig der drei parallelen Wicklungszweige nach Fig.2,
- Fig.4: einen Stator der elektrischen Maschine mit Nuten, in denen die Wicklungszweige von drei elektrischen Phasen gemäß dem ersten Ausführungsbeispiel angeordnet sind,
- Fig.5: eine Schnittansicht von vier Nuten, in denen die parallelen Drähte der elektrischen Wicklung gemäß dem ersten Ausführungsbeispiel angeordnet sind,
- Fig.6: eine Schnittansicht von vier Nuten, in denen die parallelen Drähte der elektrischen Wicklung gemäß einem zweiten Ausführungsbeispiel angeordnet sind und
- Fig.7: einen Stator einer elektrischen Maschine mit Nuten, in denen Wicklungszweige einer einzigen elektrischen Phase der elektrischen Wicklung gemäß dem zweiten Ausführungsbeispiel angeordnet sind.

### Beschreibung der Ausführungsbeispiele

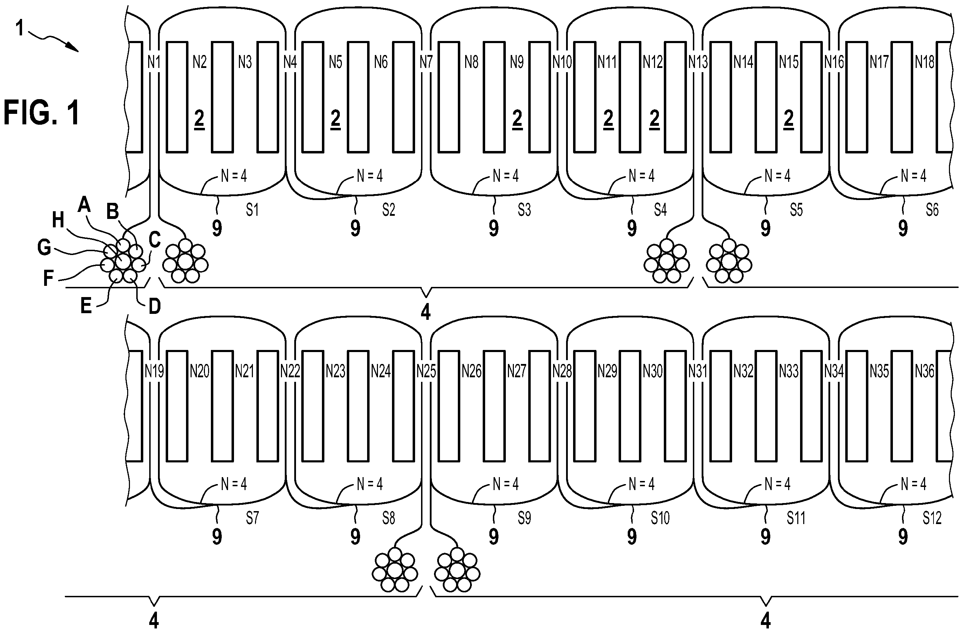

Fig.1 zeigt einen zur besseren Darstellung abgewickelten Stator 1 einer elektrischen Maschine gemäß einem ersten Ausführungsbeispiel, wobei in der oberen Reihe ein erster abgewickelter Abschnitt des Stators 1 mit Nuten 2 (N1 bis N18) und in der unteren Reihe ein unmittelbar an das rechte Ende des ersten Abschnitts des Stators 1 anschließender zweiter abgewickelter Abschnitt des Stators 1 mit Nuten 2 (N19 bis N36) dargestellt ist. Die Anzahl der Nuten 2 des Stators 1 ist ausdrücklich beliebig.

Der erfindungsgemäße Stator 1 umfasst ein Statorblechpaket, das aus einem Stapel von ringförmigen Elektroblechen zusammengesetzt ist und die Nuten 2 gemäß der Fig.1 aufweist. Die Nuten 2 des Stators 1 weisen einen Nutgrund 6 auf und sind zu einer Achse 5 des Stators 1 hin offen ausgeführt. Außerdem sind die Nuten 2 des Stators 1 zu den Stirnseiten des Stators 1 hin offen ausgebildet.

In den Nuten 2 des Stators 1 ist eine elektrische Einzugswicklung gemäß einem ersten Ausführungsbeispiel nach Fig.1 bis Fig.5 vorgesehen. Dabei wird unter einer Einzugswicklung eine elektrische Wicklung verstanden, deren Drähte mittels einer Einzugstechnik in die Nuten 2 des Stators 1 eingezogen werden. Die elektrische Einzugswicklung ist eine Mehrphasenwicklung mit beispielsweise drei Phasen 3. Die Einzugswicklung ist in allen Figuren als Schleifenwicklung ausgeführt, kann jedoch auch eine Wellenwicklung sein.

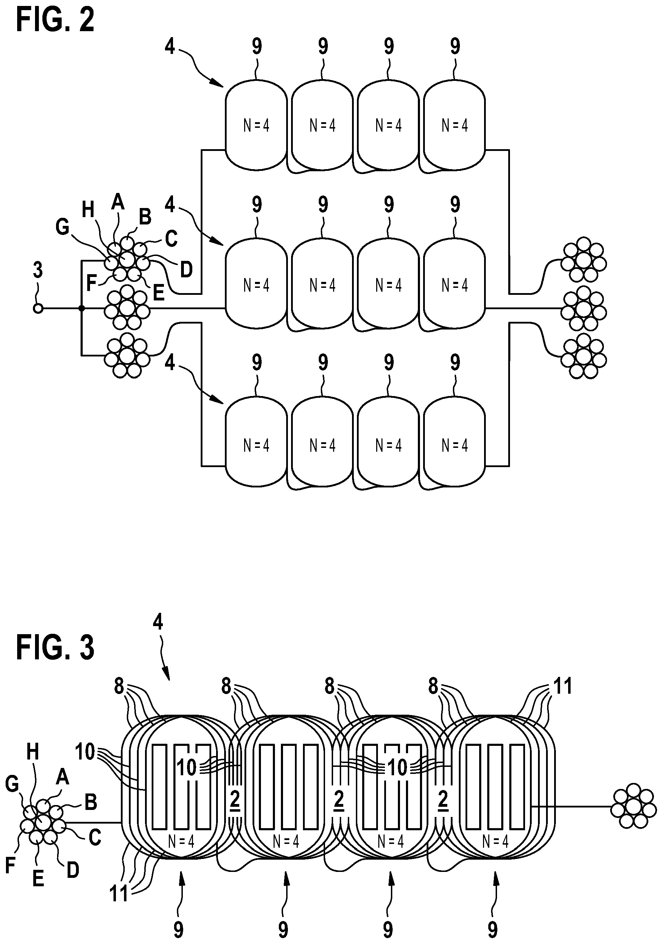

Nach Fig.2 umfasst die elektrische Einzugswicklung mehrere, beispielsweise drei Wicklungszweige 4, die jeweils mehrere parallele Drähte Z=A,B,C etc. aufweisen und jeweils nach Fig.3 ausgebildet sind. Die Wicklungszweige 4 bestehen also jeweils aus einem Bündel von parallelen Drähten Z, wobei die Anzahl der parallelen Drähte Z beliebig ist. Innerhalb eines Wicklungszweiges 4 können die parallelen Drähte unterschiedliche Drahtdurchmesser und unterschiedliche Querschnitte haben. Ebenso können die parallelen Drähte eines der Wicklungszweige 4 gegenüber zumindest einem anderen Wicklungszweig 4 unterschiedliche Drahtdurchmesser und unterschiedliche Querschnitte haben.

In der elektrischen Einzugswicklung ist nach Fig.2 zumindest ein Wicklungszweig 4 pro elektrischer Phase 3 vorgesehen. Nach dem ersten Ausführungsbeispiel weist die Einzugswicklung drei parallel geschaltete Wicklungszweige 4 pro elektrischer Phase 3 auf. In der Fig.1 sind jedoch aus Gründen der Übersichtlichkeit nur die Wicklungszweige 4 einer einzigen Phase 3 dargestellt.
Die Windungsseiten 10 der mehreren parallelen Wicklungszweige 4 können in den Nuten 2 jeweils in verschiedenen bezüglich der Achse 5 radialen Lagen angeordnet sein, wobei die verschiedenen radialen Lagen in jedem parallelen Wicklungszweig 4 beispielsweise gleich häufig vorkommen. Auf diese Weise bestehen zwischen den parallelen Wicklungszweigen keine oder nur geringe Potentialunterschiede, so dass keine oder nur geringe Ausgleichs- bzw. Kreisströme erzeugt werden.

Fig.3 zeigt beispielhaft einen Wicklungszweig der drei parallelen Wicklungszweige nach Fig.2. Der Wicklungszweig 4 bildet in seinem Verlauf jeweils mehrere Spulenwindungen 8, die jeweils Teil einer elektrischen Spule 9 sind. Eine Spulenwindung 8 ist jeweils gebildet durch zwei in unterschiedlichen Nuten 2 liegende Windungsseiten 10 eines der Wicklungszweige 4 und durch zumindest einen, beispielsweise zwei die beiden Windungsseiten 10 miteinander verbindende Windungsseitenverbinder 11. Bei einer Schleifenwicklung weist eine Spulenwindung 8 jeweils zwei Windungsseitenverbinder 11 auf. Der Wicklungszweig 4 nach Fig.3 weist beispielsweise vier in Reihe verbundene Spulen 9 auf, wobei die Spulen 9 beispielsweise jeweils eine Anzahl N von 4 Spulenwindungen 8 haben. In einem Wicklungszweig 4 können die Spulen 9 jedoch auch eine unterschiedliche Anzahl N von Spulenwindungen 8 haben. Zur Vereinfachung der Darstellung sind die mehreren Spulenwindungen 8 des Wicklungszweiges 4 in Fig.1 und Fig.2 nicht dargestellt.

Die Anzahl der Wicklungszweige 4, die Anzahl der Spulen 9 und die Anzahl N der Spulenwindungen 8 der Spulen 9 ist ausdrücklich beliebig.

Die drei parallelen Wicklungszweige 4 nach Fig.2 sind in der Fig.1 auf bestimmte Nuten 2 des Stators 1 verteilt und gemeinsam einer der elektrischen Phasen 3 zugeordnet.

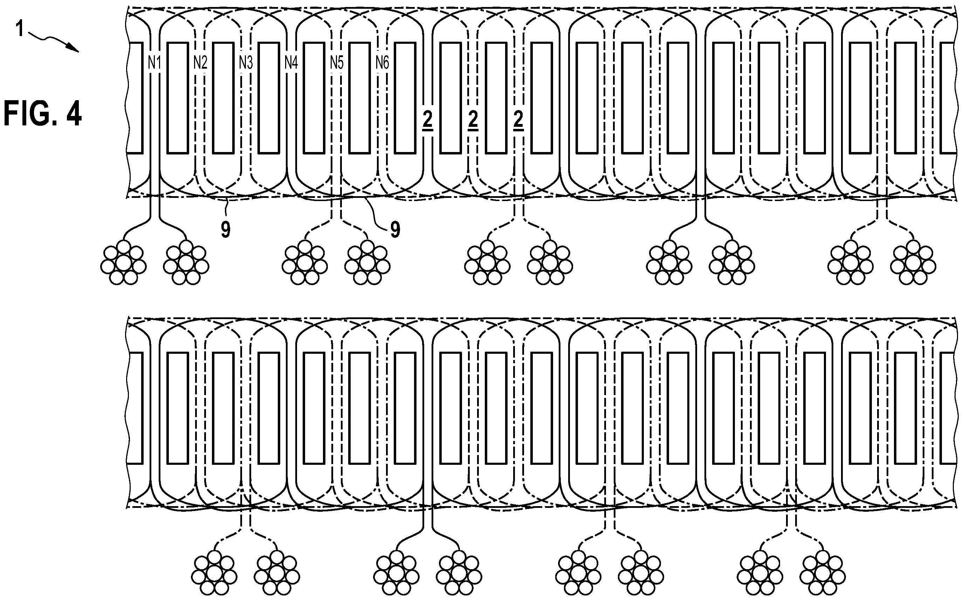

In der Fig.4 ist dargestellt, wie sich nach dem ersten Ausführungsbeispiel neun Wicklungszweige 4 nach Fig.3 auf die Nuten 2 des Stators 1 verteilen. Dabei sind dreimal drei parallele Wicklungszweige 4 nach Fig.2 vorgesehen und jeweils einer einzelnen elektrischen Phase 3 zugeordnet. Die Wicklungszweige in Fig.4, die mit einer durchgezogenen Linie dargestellt sind, gehören zu einer ersten Phase 3, die Wicklungszweige in Fig.4, die mit einer gestrichelten Linie dargestellt sind, zu einer zweiten Phase 3 und die Wicklungszweige in Fig.4, die mit einer strichpunktierten Linie dargestellt sind, gehören zu einer dritten Phase 3.

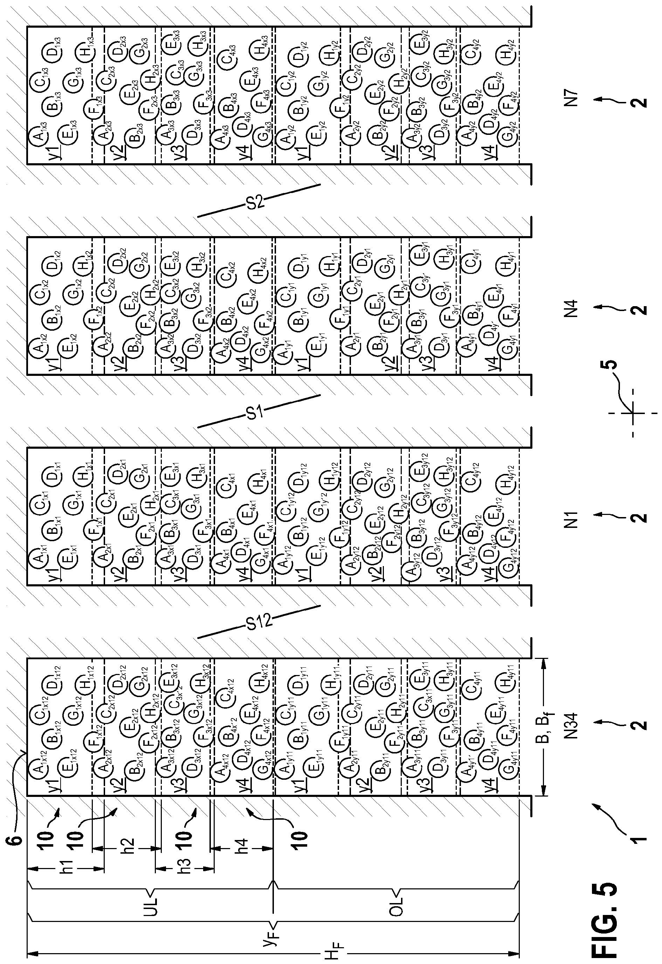

Fig.5 zeigt eine Schnittansicht von vier Nuten des Stators 1, in denen die parallelen Drähte Z einer Einzugswicklung gemäß dem ersten Ausführungsbeispiel angeordnet sind.

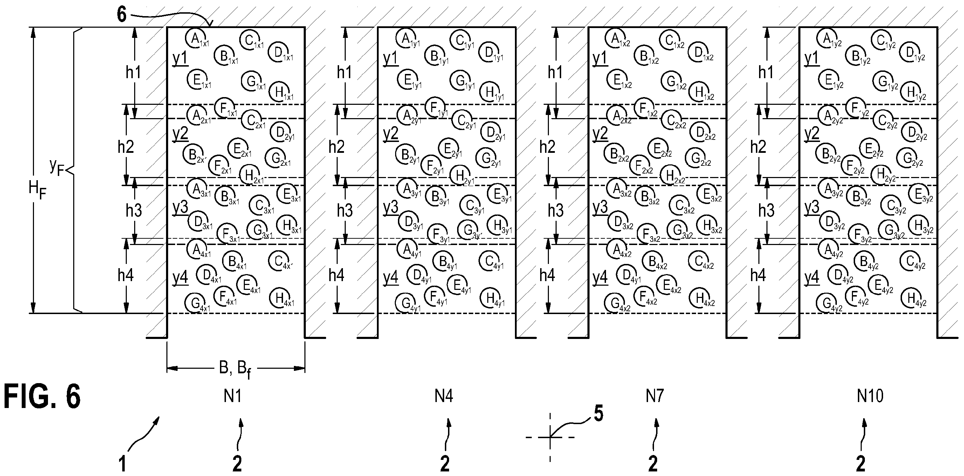

Die parallelen Drähte Z=A,B,C der Windungsseiten 10 haben in der Fig.5 und Fig.6 jeweils drei Indizes, wobei der erste Index die jeweilige fortlaufende Nummer der Spulenwindung 8 in der jeweiligen Spule 9, der zweite Index die jeweilige Windungsseite 10, nämlich entweder X oder Y, und der dritte Index die jeweilige Spule 9 angibt, zu der der jeweilige Draht gehört. So liegt beispielsweise der Draht A der Windungsseite A_{1X12} innerhalb der Nut N34 in der Spulenwindung 8 mit der Nummer 1 der entsprechenden Spule 9,S12 auf der Windungsseite 10_{X}. Die mit der Windungsseite A_{1X12} verbundene Windungsseite A_{1Y12} liegt innerhalb der Nut N1 in der Spulenwindung 8 mit der Nummer 1 derselben Spule 9,S12 auf der anderen Windungsseite 10_{Y}.

Erfindungsgemäß ist vorgesehen, dass jeweils die parallelen Drähte Z, die in derselben Nut 2 angeordnet sind, in einem gemeinsamen Nutabschnitt y_{f} der jeweiligen Nut 2 mit einer Nutabschnittshöhe H_{f} vorgesehen sind, wobei der Nutabschnitt y_{f} jeweils in radialer Richtung bezüglich der Achse 5 übereinander angeordnete schichtförmige Bereiche y1...yn umfasst, wobei jeweils die Drähte Z, die derselben Windungsseite 10 angehören, in demselben schichtförmigen Bereich y1...yn des Nutabschnitts y_{f} der jeweiligen Nut 2 angeordnet sind. Die Anzahl n der schichtförmigen Bereiche y1,...yn entspricht dabei der Anzahl N der in derselben Nut 2 angeordneten Windungsseiten 10.

In jeder Nut 2 des Stators 1 sind mehrere, beispielsweise acht Windungsseiten 10 einer oder mehrerer Spulen 9 vorgesehen. Die Windungsseiten 10 einer einzelnen Nut 2, die einer ersten Spule 9 zugeordnet sind, können dabei in einer gemeinsamen, dem Nutgrund 6 zugewandten Unterlage UL und die Windungsseiten 10 derselben Nut 2, die einer zweiten Spule 9 zugeordnet sind, in einer gemeinsamen, dem Nutgrund 6 abgewandten Oberlage OL des Nutabschnitts y_{f} angeordnet sein oder umgekehrt. Durch diese Anordnung wird eine sogenannte zweischichtige Einzugswicklung gebildet, bei der Oberlage und Unterlage zwei Schichten bilden und bei der in den Nuten 2 jeweils Windungsseiten 10 von zwei Spulen 9 vorgesehen sind. Diese zwei Spulen 9 können jeweils demselben Wicklungszweig 4 oder unterschiedlichen Wicklungszweigen 4 angehören. Dabei sind erfindungsgemäß die parallelen Drähte Z in der Unterlage UL bzw. Oberlage OL, die derselben Windungsseite 10 angehören, in demselben schichtförmigen Bereich y1...yn der Unter- bzw. Oberlage der jeweiligen Nut 2 angeordnet.

Die Windungsseiten 10,10_{X},10_{Y} derselben Spule 9 sind beispielsweise derart auf zwei Nuten 2 verteilt, dass die Windungsseiten 10 in der einen Nut 2 in der Oberlage OL und in der anderen Nut 2 in der Unterlage UL angeordnet sind, wobei die Reihenfolge der Windungsseiten 10 in den beiden Lagen UL,OL beispielsweise identisch ist. Gemäß der Ausführung nach Fig.5 ist die Reihenfolge der Windungsseiten 10 innerhalb eines Nutabschnitts y_{f} so vorgesehen, dass Windungsseiten 10 von unmittelbar aufeinanderfolgenden Spulenwindungen 8 derselben Spule 9 jeweils in benachbarten schichtförmigen Bereichen y1...yn angeordnet sind. Die Windungsseiten 10 eines Nutabschnitts y_{f} können jedoch ausdrücklich in beliebiger Reihenfolge innerhalb des Nutabschnitts y_{f} angeordnet sein.

In der Nut N1 und der Nut N4 der Fig.5 sind gemäß dem ersten Ausführungsbeispiel jeweils acht Windungsseiten 10 mit jeweils acht parallelen Drähten Z vorgesehen. Die Anzahl der Windungsseiten 10 pro Nut 2 ist dabei ausdrücklich beliebig. Die Windungsseiten 10, die in einer gemeinsamen Nut 2 angeordnet sind, können der gleichen oder verschiedenen elektrischen Phasen 3 zugeordnet sein.
Gemäß dem Ausführungsbeispiel bilden vier, in der Unterlage angeordnete Windungsseiten 10 der Nut N1 und vier in der Oberlage angeordnete Windungsseiten 10 der Nut N4 zusammen mit den entsprechenden Windungsseitenverbindern 11 eine Spule S1. Die vier in der Oberlage liegenden Windungsseiten 10 der Nut N1 bilden mit vier in der Unterlage vorgesehenen Windungsseiten 10 der Nut N34 und den entsprechenden Windungsseitenverbindern 11 eine Spule S12. Weiterhin bilden vier in der Unterlage liegende Windungsseiten 10 der Nut N4 mit vier in der Oberlage vorgesehenen Windungsseiten 10 der Nut N7 und mit den entsprechenden Windungsseitenverbindern 11 eine Spule S2.

Die schichtförmigen Bereiche y1,...yn haben jeweils eine radiale Höhe h1,...hn, die kleiner oder gleich ist als ein Wert, der sich aus einem Faktor F multipliziert mit dem Verhältnis der jeweiligen Nutabschnittshöhe H_{f} zur Anzahl n der schichtförmigen Bereiche y1,...yn des entsprechenden Nutabschnitts y_{f} berechnet. Der Faktor F liegt im Bereich zwischen 1,1 und 2. Die Anzahl n der schichtförmigen Bereiche y1,...yn des jeweiligen Nutabschnitts y_{f} entspricht der Anzahl N der Windungsseiten 10, die in derselben Nut 2 angeordnet sind. Gemäß dem Ausführungsbeispiel nach Fig.5 sind in der Nut N1 in der Oberlage vier Windungsseiten 10 der Spule S12 und in der Unterlage vier Windungsseiten 10 der Spule S1 vorgesehen, so dass die Anzahl n der schichtförmigen Bereiche y1,...yn der Nut N1 acht beträgt.

Der Faktor F berechnet sich aus der Formel F= 1,1+0,05 ^{∗}(n-2). Die radiale Höhe h1...hn der schichtförmigen Bereiche y1...yn wird jeweils gemessen von dem höchsten Punkt des obersten Drahtes zum niedrigsten Punkt des untersten Drahtes des jeweiligen schichtförmigen Bereiches y1...yn. Der schichtförmige Bereich y1,...yn weist beispielsweise über die gesamte axiale Länge der Nut 2 jeweils einen rechteckförmigen Querschnitt auf. Dabei hat der schichtförmige Bereich y1,...yn jeweils eine Breite B_{f}, die der Breite B der Nuten 2 entspricht, ggf. abzüglich der Dicke einer in der Nut 2 angeordneten, nicht dargestellten Nutisolation und/oder abzüglich vorhandener Luftspalte zwischen der Nut 2 und der Nutisolation.

Benachbarte schichtförmige Bereiche y1...yn können sich maximal mit einem vorbestimmten Prozentsatz P ihrer radialen Höhe h1...hn überschneiden. Dies gilt auch für benachbarte schichtförmige Bereiche y1...yn zwischen der Oberlage OL und der Unterlage UL. Dieser Prozentsatz P berechnet sich aus der Formel P=F-1. Die Überlappung ergibt sich, da sich die Drähte der elektrischen Wicklung maschinell mittels der Einzugstechnik nur sehr schwierig in idealer Weise in die Nuten 2 einlegen lassen. Daher wird eine gewisse Überlappung der schichtförmigen Bereiche y1...yn zugelassen, was nur eine sehr geringe Auswirkung auf die zusätzlichen Kupferverluste hat. Die Überlappung der schichtförmigen Bereiche y1...yn ist in der Fig.5 und Fig.6 mittels der zwei unterschiedlich gestrichelten Trennlinien zwischen zwei schichtförmigen Bereichen y1...yn dargestellt.

Fig.6 zeigt eine Schnittansicht von vier Nuten des Stators 1, in denen die parallelen Drähte Z einer Einzugswicklung gemäß einem zweiten Ausführungsbeispiel angeordnet sind.

Das zweite Ausführungsbeispiel unterscheidet sich gegenüber dem ersten Ausführungsbeispiel darin, dass in jeder Nut 2 nur Windungsseiten 10 einer einzigen Spule 9 vorgesehen sind.

Auch für die Einzugswicklung gemäß dem zweiten Ausführungsbeispiel gilt, dass jeweils die parallelen Drähte Z, die in derselben Nut 2 angeordnet sind, in dem gemeinsamen Nutabschnitt y_{f} der jeweiligen Nut 2 mit einer Nutabschnittshöhe H_{f} vorgesehen sind, wobei der Nutabschnitt y_{f} jeweils in radialer Richtung bezüglich der Achse 5 übereinander angeordnete schichtförmige Bereiche y1...yn umfasst, wobei jeweils die Drähte Z, die derselben Windungsseite 10 angehören, in demselben schichtförmigen Bereich y1...yn des Nutabschnitts y_{f} der jeweiligen Nut 2 angeordnet sind.

In der Nut N1 und der Nut N4 der Fig.6 sind gemäß dem zweiten Ausführungsbeispiel jeweils vier Windungsseiten 10 mit jeweils acht parallelen Drähten Z vorgesehen. Die Anzahl der Windungsseiten 10 pro Nut 2 ist dabei ausdrücklich beliebig. Gemäß dem Ausführungsbeispiel bilden die vier Windungsseiten 10 der Nut N1 und die vier Windungsseiten 10 der Nut N4 zusammen mit den entsprechenden Windungsseitenverbindern 11 eine Spule S1. Die vier Windungsseiten 10 der Nut N7 bilden mit den vier Windungsseiten 10 der Nut N10 und den entsprechenden Windungsseitenverbindern 11 eine Spule S2.

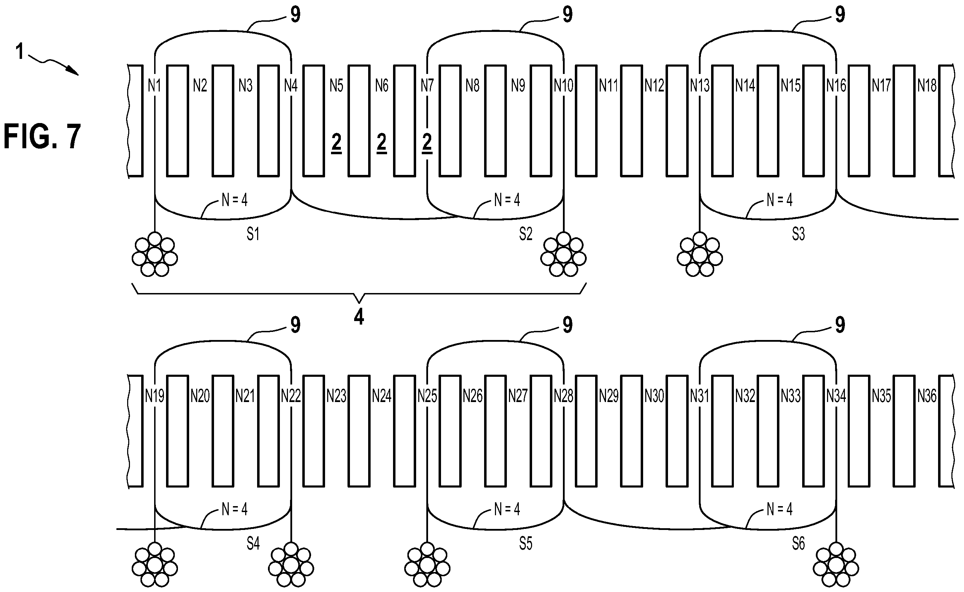

Fig.7 zeigt einen zur besseren Darstellung abgewickelten Stator 1 einer elektrischen Maschine gemäß dem zweiten Ausführungsbeispiel nach Fig.6, wobei in der oberen Reihe ein erster abgewickelter Abschnitt des Stators 1 mit Nuten 2 (N1 bis N18) und in der unteren Reihe ein unmittelbar an das rechte Ende des ersten Abschnitts des Stators 1 anschließender zweiter abgewickelter Abschnitt des Stators 1 mit Nuten 2 (N19 bis N36) dargestellt ist.

In der elektrischen Einzugswicklung sind gemäß dem zweiten Ausführungsbeispiel drei parallel geschaltete Wicklungszweige 4 pro elektrischer Phase 3 vorgesehen. In der Fig.7 sind jedoch aus Gründen der Übersichtlichkeit nur die Wicklungszweige 4 einer einzigen Phase 3 dargestellt. Die Wicklungszweige 4 weisen gemäß dem zweiten Ausführungsbeispiel zwei in Reihe verbundene Spulen 9 auf, wobei die Spulen 9 beispielsweise jeweils 4 Spulenwindungen 8 haben. Die Anzahl der Wicklungszweige 4, die Anzahl der Spulen 9 und die Anzahl der Spulenwindungen 8 der Spulen 9 ist jedoch ausdrücklich beliebig.

## Patentansprüche

1. Stator einer elektrischen Maschine, der zu einer Achse (5) des Stators (1) hin offene Nuten (2) aufweist, mit einer elektrischen Einzugswicklung, die mehrere Wicklungszweige (4) umfasst, die jeweils mehrere, in den Nuten (2) angeordnete parallele Drähte (Z=A,B,C etc.) aufweisen, wobei die Wicklungszweige (4) in ihrem Verlauf jeweils mehrere Spulenwindungen (8) bilden, die jeweils Teil einer elektrischen Spule (9) sind, wobei eine Spulenwindung (8) jeweils gebildet ist durch zwei in unterschiedlichen Nuten (2) liegende Windungsseiten (10) eines der Wicklungszweige (4) und durch zumindest einen die beiden Windungsseiten (10) miteinander verbindenden Windungsseitenverbinder (11), wobei
die parallelen Drähte (Z), die in derselben Nut (2) angeordnet sind, jeweils in einem gemeinsamen Nutabschnitt (y_{f}) der jeweiligen Nut (2) mit einer Nutabschnittshöhe (H_{f}) vorgesehen sind, wobei der Nutabschnitt (y_{f}) jeweils in radialer Richtung übereinander angeordnete schichtförmige Bereiche (y1...yn) umfasst, wobei jeweils die parallelen Drähte (Z), die derselben Windungsseite (10) angehören, in demselben schichtförmigen Bereich (y1...yn) des Nutabschnitts (y_{f}) angeordnet sind,
**dadurch gekennzeichnet, dass**
der schichtförmige Bereich (y1,...yn) jeweils eine radiale Höhe (h1,...hn) hat, die kleiner ist als ein Wert, der sich aus einem Faktor (F) multipliziert mit dem Verhältnis der Nutabschnittshöhe (H_{f}) zur Anzahl (n) der schichtförmigen Bereiche (y1,...yn) pro Nutabschnitt (y_{f}) berechnet, wobei der Faktor (F) im Bereich zwischen 1,1 und 2 liegt und die Anzahl (n) der schichtförmigen Bereiche (y1,...yn) pro Nutabschnitt (y_{f}) der Anzahl (N) der in derselben Nut (2) angeordneten Windungsseiten (10) entspricht, wobei in jeder Nut (2) mehrere Windungsseiten (10) einer oder mehrerer Spulen (9) vorgesehen sind, wobei der Faktor (F) sich aus der Formel F= 1,1+0,05 ^{∗}(n-2) berechnet.

2. Stator nach Anspruch 1, **dadurch gekennzeichnet, dass** der schichtförmige Bereich (y1,...yn) jeweils eine Breite (B_{f}) aufweist, die der Breite (B) der Nuten (2) entspricht, ggf. abzüglich der Dicke einer Nutisolation und/oder abzüglich vorhandener Luftspalte zwischen der Nut und der Nutisolation.

3. Stator nach einem der vorhergehenden Ansprüche, **dadurch gekennzeichnet, dass** sich benachbarte schichtförmige Bereiche (y1...yn) maximal mit einem vorbestimmten Prozentsatz ihrer radialen Höhe (hl...hn) überschneiden.

4. Stator nach einem der vorhergehenden Ansprüche, **dadurch gekennzeichnet, dass** in einer Nut (2) jeweils mehrere Windungsseiten (10) von zwei Spulen (9) vorgesehen sind, wobei die Windungsseiten (10) der ersten Spule (9) in einer gemeinsamen Unterlage (UL) und die Windungsseiten (10) der zweiten Spule (9) in einer gemeinsamen Oberlage (OL) des Nutabschnitts (y_{f}) angeordnet sind oder umgekehrt.

5. Stator nach Anspruch 4, **dadurch gekennzeichnet, dass** die zwei Spulen (9) jeweils demselben Wicklungszweig (4) oder unterschiedlichen Wicklungszweigen (4) angehören.

6. Stator nach einem der vorhergehenden Ansprüche, **dadurch gekennzeichnet, dass** jeder Wicklungszweig (4) eine oder mehrere in Reihe verbundene elektrische Spulen (9) ausbildet.

7. Stator nach einem der vorhergehenden Ansprüche, **dadurch gekennzeichnet, dass** mehrere parallele Wicklungszweige (4) derselben Phase vorgesehen sind, deren Windungsseiten (10) in den Nuten (2) jeweils in verschiedenen radialen Lagen angeordnet sind, wobei die verschiedenen radialen Lagen in jedem parallelen Wicklungszweig (4) gleich häufig vorkommen.

8. Elektrische Maschine mit einer Stator nach einem der vorhergehenden Ansprüche.

## Claims

1. Stator of an electric machine, which stator has grooves (2) which are open towards an axis (5) of the stator (1), having an electrical pull-in winding which comprises multiple winding branches (4) which each have multiple parallel wires (Z=A,B,C etc.) arranged in the grooves (2), wherein the winding branches (4), in the course thereof, each form multiple coil windings (8) which are in each case part of an electrical coil (9), wherein a coil winding (8) is in each case formed by two winding sides (10), situated in different grooves (2), of one of the winding branches (4) and by at least one winding-side connector (11) which connects the two winding sides (10) to one another, wherein
the parallel wires (Z) that are arranged in the same groove (2) are provided in each case and a common groove portion (y_{f}) of the respective groove (2), with a groove portion height (H_{f}), wherein the groove portion (y_{f}) comprises layer-like regions (y1...yn) arranged in each case one above the other in a radial direction, wherein in each case the parallel wires (Z) which belong to the same winding side (10) are arranged in the same layer-like region (y1...yn) of the groove portion (y_{f}),
**characterized in that**
the layer-like region (y1,...yn) has in each case a radial height (h1,...hn) which is less than a value calculated from a factor (F) multiplied by the ratio of the groove portion height (H_{f}) to the number (n) of the layer-like regions (y1,...yn) per groove portion (y_{f}), wherein the factor (F) lies in the range between 1.1 and 2 and the number (n) of layer-like regions (y1,...yn) per groove portion (y_{f}) corresponds to the number (N) of winding sides (10) arranged in the same groove (2), wherein multiple winding sides (10) of one or more coils (9) are provided in each groove (2), wherein the factor (F) is calculated from the formula F = 1.1+0.05^{∗}(n-2).

2. Stator according to Claim 1, **characterized in that** the layer-like region (y1,...yn) has in each case a width (B_{f}) which corresponds to the width (B) of the grooves (2), possibly minus the thickness of a groove insulation and/or minus gaps that are present between the groove and the groove insulation.

3. Stator according to either of the preceding claims, **characterized in that** adjacent layer-like regions (y1...yn) overlap at most by a predetermined percentage of their radial height (h1...hn).

4. Stator according to any of the preceding claims, **characterized in that** in each case multiple winding sides (10) of two coils (9) are provided in one groove (2), wherein the winding sides (10) of the first coil (9) are arranged in a common underlying layer (UL) and the winding sides (10) of the second coil (9) are arranged in a common overlying layer (OL) of the groove portion (y_{f}), or vice versa.

5. Stator according to Claim 4, **characterized in that** the two coils (9) belong in each case to the same winding branch (4) or to different winding branches (4).

6. Stator according to any of the preceding claims, **characterized in that** each winding branch (4) forms one or more series-connected electrical coils (9).

7. Stator according to any of the preceding claims, **characterized in that** multiple parallel winding branches (4) of the same phase are provided, the winding sides (10) of which are arranged in the grooves (2) in each case in different radial layers, wherein the different radial layers occur with equal frequency in each parallel winding branch (4).

8. Electric machine having a stator according to any of the preceding claims.

## Revendications

1. Stator d'une machine électrique, lequel possède des rainures (2) ouvertes en direction d'un axe (5) du stator (1), comprenant un enroulement d'appel qui comporte plusieurs branches d'enroulement (4) qui possèdent respectivement plusieurs fils parallèles (Z = A, B, C etc.) disposés dans les rainures (2), les branches d'enroulement (4) formant respectivement dans leur tracé plusieurs enroulements de bobine (8), qui sont respectivement une partie d'une bobine (9) électrique, un enroulement de bobine (8) étant respectivement formé par deux côtés d'enroulement (10) se trouvant dans des rainures (2) différentes de l'une des branches d'enroulement (4) et par au moins un connecteur latéral d'enroulement (11) qui relie ensemble les côtés d'enroulement (10),
les fils parallèles (Z) étant disposés dans la même rainure (2), respectivement dans une portion de rainure (y_{f}) commune de la rainure (2) respective avec une hauteur de portion de rainure (H_{f}), la portion de rainure (y_{f}) comportant des zones stratiformes (y1, ... yn) respectivement disposées les unes au-dessus des autres dans le sens radial, les fils parallèles (Z) qui font partie du même côté d'enroulement (10) étant respectivement disposés dans la même zone stratiforme (y1, ... yn) de la portion de rainure (y_{f}),
**caractérisé en ce que**
la zone stratiforme (y1, ... yn) présente respectivement une hauteur radiale (h1, ... hn) qui est inférieure à une valeur qui se calcule en multipliant un facteur (F) par le rapport entre la hauteur de portion de rainure (H_{f}) et le nombre (n) de zones stratiformes (y1, ... yn) par portion de rainure (y_{f}), le facteur (F) étant compris dans la plage entre 1,1 et 2 et le nombre (n) de zones stratiformes (y1, ... yn) par portion de rainure (y_{f}) correspondant au nombre (N) de côtés d'enroulement (10) disposés dans la même rainure (2), plusieurs côtés d'enroulement (10) d'une ou plusieurs bobines (9) se trouvant dans chaque rainure (2), le facteur (F) étant calculé à partir de la formule F = 1,1+0,05^{∗}(n-2).

2. Stator selon la revendication 1, **caractérisé en ce que** la zone stratiforme (y1, ... yn) possède respectivement une largeur (B_{f}) qui correspond à la largeur (B) des rainures (2), le cas échéant moins l'épaisseur d'une isolation de rainure et/ou moins l'entrefer présent entre la rainure et l'isolation de rainure.

3. Stator selon l'une des revendications précédentes, **caractérisé en ce que** les zones stratiformes (y1, ... yn) voisines se croisent au maximum avec un pourcentage prédéterminé de leur hauteur radiale (h1, ... hn).

4. Stator selon l'une des revendications précédentes, **caractérisé en ce que** plusieurs côtés d'enroulement (10) de deux bobines (9) se trouvent respectivement dans une rainure (2), les côtés d'enroulement (10) de la première bobine (9) étant disposés dans une couche inférieure (UL) commune et les côtés d'enroulement (10) de la deuxième bobine (9) dans une couche supérieure (OL) de la portion de rainure (y_{f}), ou inversement.

5. Stator selon la revendication 4, **caractérisé en ce que** les deux bobines (9) font respectivement partie de la même branche d'enroulement (4) ou de branches d'enroulement (4) différentes.

6. Stator selon l'une des revendications précédentes, **caractérisé en ce que** chaque branche d'enroulement (4) forme une ou plusieurs bobines (9) branchées électriquement en série.

7. Stator selon l'une des revendications précédentes, **caractérisé en ce que** plusieurs branches d'enroulement (4) en parallèle de la même phase sont présentes, dont les côtés d'enroulement (10) sont disposés dans les rainures (2) respectivement dans des couches radiales différentes, les différentes couches radiales survenant à la même fréquence dans chaque branche d'enroulement (4) parallèle.

8. Machine électrique comprenant un stator selon l'une des revendications précédentes.
